# EUROPEAN PATENT APPLICATION

(11) **EP 1 808 620 A2**
(43) Date of publication of application: **18.07.2007**
(21) Application number: 06126129.3
(22) Date of filing: 14.12.2006
(51) Int. Cl.: F16H 59/04

(54) **Shift Mechanism for Manual Gearbox**

(30) Priority: 16.12.2005 SE 0502798
(71) Applicant: GM Global Technology Operations, Inc., Detroit, MI 48265-3000 (US)
(72) Inventor: Englund, Fredrik, S-461 39 Trollhättan (SE); Karlsson, Torulf, S-463 32 Lilla Edet (SE)
(74) Representative: Lind, Urban Arvid Oskar

(57) **Abstract**

The present invention relates to a shift mechanism for a manual gearbox of a vehicle. A transverse movement of a gear selector (11) actuates the shift mechanism to select gear by axial translation of the gear shaft (5), and a longitudinal movement of the gear selector (11) actuates the shift mechanism to shift gears by rotating the gear shaft (5) by the action of an inertial mass (3). The rotation and the translation, respectively, of the gear shaft (5) take place by means of independent parts of the shift mechanism. The mechanism for selecting gear is released from the inertial mass (3).

## Description

### Field of the Invention

The present invention relates to a shift mechanism for a manual gearbox of a vehicle. A transverse movement of a gear selector/gearshift lever actuates the shift mechanism to select gear by axial translation of the gear shaft, and a longitudinal movement of the gear selector/gearshift lever actuates the shift mechanism to shift gears by rotating the gear shaft by the action of an inertial mass.

### Background Art

It is desirable for a shift mechanism of a manual gearbox to be affected by a moment of inertia when shifting gears, that is as the gearshift lever is moved in the longitudinal direction. However, a moment of inertia is not desirable, which actuates the shift mechanism when selecting gear as the gearshift lever is moved in the lateral/transverse direction. If a moment of inertia actuates the shift mechanism when shifting gears, a scratching noise and synchronising movements from the gearbox can be hidden and it is possible to achieve a more solid feeling and less vibrations in the gearshift lever.

It is thus desirable for a shift mechanism to have as small inertial mass as possible that affects the function of the mechanism selecting gear. In gearboxes according to prior art it is, however, common for the shift mechanism for both shifting gears and selecting gear to be affected by an inertial mass, which results in the risk of unlocking the gearshift lever when quickly shifting gears.

### Summary of the Invention

An object of the present invention is to provide an improved shift mechanism that is affected by a moment of inertia only when shifting gears.

A further object of the present invention is to provide a shift mechanism with a minimum of play.

The above objects and other objects that will be evident from the following description are achieved by a device according to the appended claims.

The invention is based on the knowledge that it is possible to provide a shift mechanism which has a separated inertial mass for shifting gears and selecting gear.

According to one aspect of the invention, a shift mechanism for a manual gearbox of a vehicle is described. A transverse movement of a gear selector actuates the shift mechanism to select gear by axial translation of the gear shaft, and a longitudinal movement of the gear selector actuates the shift mechanism to shift gears by rotating the gear shaft by the action of an inertial mass. The rotation and the translation, respectively, of the gear shaft occur by means of independent parts of the shift mechanism, whereby the mechanism for selecting gear is released from said inertial mass.

The mechanism for selecting gear acts directly on the gear shaft without being actuated by the mechanism for shifting gears.

Preferably a gear lever is integrated with said inertial mass, which gear lever actuates the gear shaft to be rotated about its own axis. By the gear lever being integrated with the inertial mass, formed as a lump at one end, attachment to the sleeve which actuates the gear shaft to rotate and also the attachment for the shift wire. In this manner, only a small number of components is required, and play in the mechanism can be reduced to a minimum.

Advantageously, the gear lever has a sleeve which moves freely relative to the longitudinal axis of the gear shaft, which sleeve actuates the gear shaft to be rotated about its own axis. Due to the fact that the sleeve does not actuate the gear shaft in its longitudinal direction, the selection of gear can take place without being affected by the inertial mass.

In a preferred embodiment, the sleeve has an elongated hole which cooperates with a pin on the gear shaft to actuate the gear shaft to be rotated about its own axis when shifting gears. This results in a reliable and robust construction. It is also possible to use other convenient constructions; in an alternative embodiment (not shown) the sleeve consists of ball slines, that is the gear shaft is provided with splines where balls can roll, the balls are arranged on the inside of the sleeve and result in a good axial arrangement in bearings while at the same time the sleeve can transmit axial torque to the gear shaft since the balls sink into the splines. In another alternative embodiment (not shown) the sleeve has a pin extending into an elongate groove in the shaft.

In the preferred embodiment, the dimension of said pin is smaller than the dimension of said hole in its elongate direction along the gear shaft. By the length of the hole being adjusted to the desired free axial mobility of the gear shaft, the pin of the gear shaft is affected only by the long sides of the hole in the sleeve.

Preferably, the elongated hole allows axial mobility of the gear shaft independently of said gear lever and inertial mass. This can be controlled, as mentioned above, by the hole and the geometry of the pin.

The gear shaft is advantageously biased and preloaded from the gear box in the direction of rotation so that play is avoided in the shift mechanism. The play that may possibly appear in the mechanism, in for instance hinges and the transition between the pin and the hole, can be reduced to a minimum by biasing the gear shaft, that is the gear shaft engages the shift mechanism by a torque.

In a preferred embodiment, the selector lever affects directly and only the axial movement of the gear shaft via a wheel which cooperates with axial abutments of the gear shaft. With two axial abutments of the gear shaft, one in each direction of displacement, it is possible to provide displacement back and forth by part of the selector lever projecting between the two axial abutments, for example with a wheel.

The shift mechanism according to the invention results in a small and compact construction, which is favourable; furthermore the small number of links and hinges makes it possible to reduce play to a minimum, resulting in a robust and reliable shift mechanism. There will also be a reduced risk of locking of the gears since the inertial mass affects only the shifting of gears and not the selection of gear, that is a reduced risk of the gears jamming, for example, when quickly shifting gears.

Further advantages are that the invention produces less vibrations in the gearshift lever and an improved sense of quality in the gearshift lever when selecting gear and shifting gears.

### Brief Description of the Drawings

The invention will be described in more detail in the following with reference to the accompanying drawings which by way of example illustrate currently preferred embodiments of the invention.

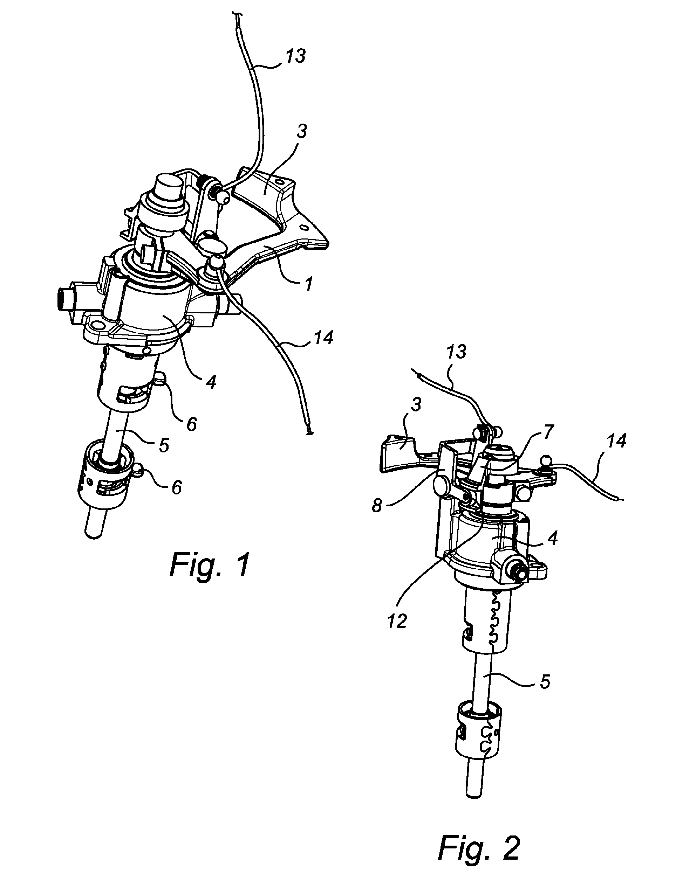

Fig. 1 is a perspective view of the shift mechanism according to the invention.

Fig. 2 is a perspective view of the shift mechanism, seen from a different angle.

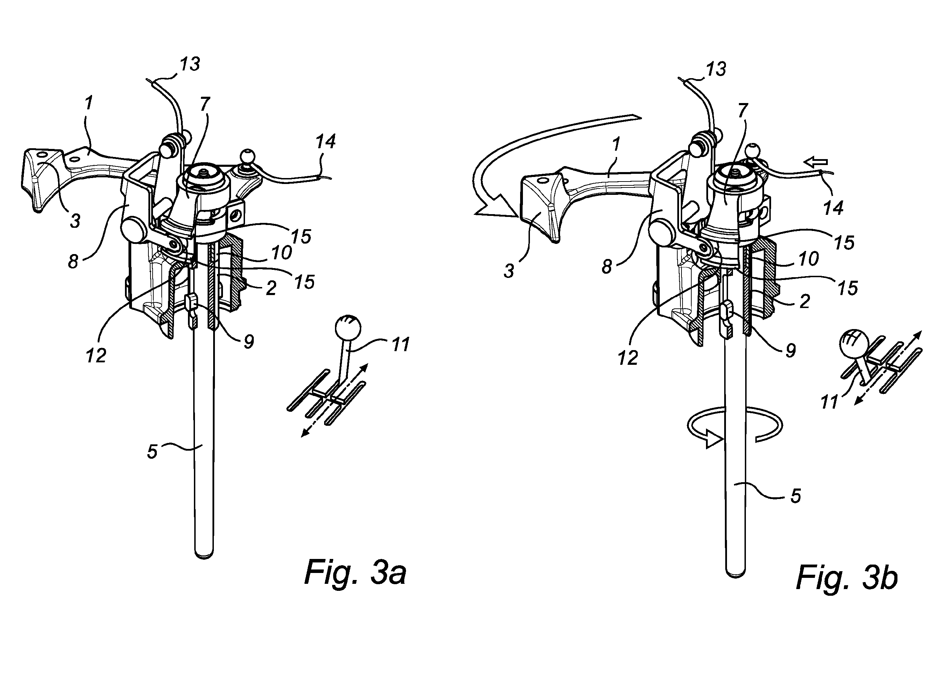

Figs 3a-b are part-sectional perspective views of a process of shifting gears using the shift mechanism.

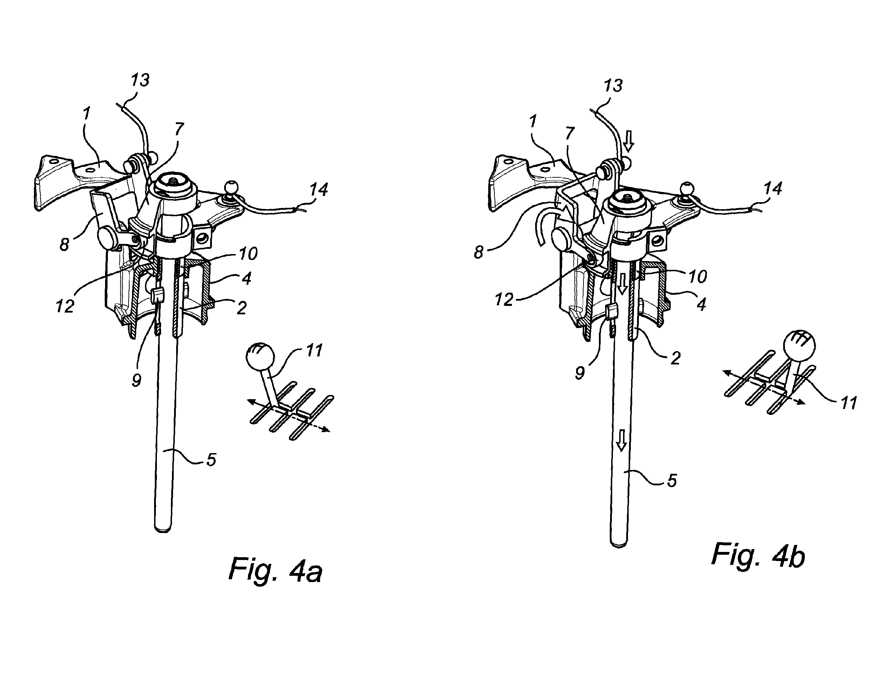

Figs 4a-b are part-sectional perspective views of a process of selecting gear using the shift mechanism.

### Description of Preferred Embodiments

The shift mechanism in the figures illustrates a preferred embodiment of the invention, in which the wires 13, 14 from the gearshift lever 11 each connect to a ball-and-socket joint for actuating the gear lever 1 and the selector lever 8. When the gearshift lever 11 is moved in the lateral direction to select gear, the selector wire 13 actuates the selector lever to select gear. In the same way, the shifting of gears is operated from the gearshift lever 11 (forwards/backwards) via the gear wire 14 which actuates the gear lever.

The gear lever 1 is integrally formed with an inertial mass 3 at one end, connection of the gear wire 14, via a ball-and-socket joint, in such a manner that the desired properties, such as the length of the lever and the desired moment of inertia, are achieved. At the other end of the gear lever 1, the gear lever is attached to the sleeve 2 which has a hole, elongated in the longitudinal direction of the sleeve, on each side of the sleeve.

The selector wire 12 actuates, by means of the selector lever 8, the gear shaft 5 to be displaced in the longitudinal direction, which takes place by the selector lever 8 being articulated and having one lever which is actuated by the selector wire 13 and another lever which via a wheel 12 actuates the freely projecting end of the gear shaft 5. The wheel 12 of the selector lever 8 actuates two axial abutments 15 which are formed on a part which in turn is attached to the end of the gear shaft. Since the wheel 12 acts between the two axial abutments 15, the gear shaft 5 can be displaced in both directions by means of the selector lever 8 and the wheel 12.

When the selector lever 8 displaces the gear shaft 5 in the longitudinal direction, the inertial mass 3 has no effect since the pin 9 of the gear shaft can run freely in the groove/hole of the sleeve 2. Correspondingly, also the gear lever 1 is released from the selector mechanism since the wheel 12 is not actuated when rotating the gear shaft 5 and its axial abutments 15.

The shift forks of the gear box are operated by the axial movement of the fork carriers 6 up and down and by rotation. The fork carriers 6 are fixedly connected to the inner shaft 5 which in turn is connected to the selector element 7. The sleeve 2 is rotationally mounted 10 relative to the gear shaft 5, but fixed axially in the housing 4. The inner shaft 5 is axially mounted in bearings in the sleeve 2 but due to the pin 9 that runs in the groove, the shaft 5 is prevented from rotating relative to the sleeve 2. With this design, the gear lever 1 transmits the rotary motion to the sleeve 2, the pin 9 via the inner shaft and out to fork carriers which actuate the gear box to shift gears. The selector lever 8 transmits the axial movement to the wheel 12, the axial abutments 15 via the inner shaft 5 and fork carriers so as to finally actuate the gear box to select gear.

By the rotation-controlled sleeve 2 and the axially controlled shaft 5, the rotary and axial movements are controlled independently of each other. With this solution, the mass of inertia from the inner shaft 5 with its connections to the forks and to the selector lever will, however, affect both the shifting of gears and the selection of gear. With a gear lever 1 that does not require space in its axial direction, its mass can be increased, which results in a more solid feeling and less vibrations in the gearshift lever. By using biased and spring-loaded fork carriers 6, in the direction of rotation, the gear lever 1 and its connections can be kept free of play under vibrations.

By using a rotation-controlled sleeve 2 and an axially controlled shaft, the rotary and axial movements of the gear shaft 5 can be controlled independently of each other in a less complicated manner.

## Claims

1. A shift mechanism for a manual gearbox of a vehicle, a transverse movement of a gear selector (11) actuating the shift mechanism to select gear by axial translation of the gear shaft (5), and a longitudinal movement of the gear selector (11) actuating the shift mechanism to shift gears by rotating the gear shaft (5) by the action of an inertial mass (3), **characterised in that** said rotation and translation, respectively, of the gear shaft (5) occur by means of a rotation-controlled sleeve (2), which sleeve allows free mutual movement between the gear shaft (5) and the sleeve in the longitudinal direction of the gear shaft, whereby the mechanism for selecting gear is released from said inertial mass (3).

2. A shift mechanism as claimed in claim 1, wherein a gear lever (1) is integrated with said inertial mass (3), which gear lever (1) actuates the gear shaft (5) to be rotated about its own axis.

3. A shift mechanism as claimed in claim 1, wherein said sleeve (2) has an elongated hole which cooperates with a pin (9) on the gear shaft (5) to actuate the gear shaft to be rotated about its own axis when shifting gears.

4. A shift mechanism as claimed in claim 3, wherein the dimension of said pin (9) is smaller than the dimension of said hole in its elongated direction along the gear shaft (5).

5. A shift mechanism as claimed in any one of claims 3-4, wherein said elongated hole allows axial mobility of the gear shaft (5) independently of said gear lever (1) and inertial mass.

6. A shift mechanism as claimed in any one of the preceding claims, wherein the gear shaft (5) is biased and preloaded by the gear box in the direction of rotation, thereby avoiding play in the shift mechanism.

7. A shift mechanism as claimed in any one of the preceding claims, wherein a selector lever (8) directly actuates only the axial movement of the gear shaft (5) via a wheel (12) which cooperates with axial abutments of the gear shaft (5).
